# EUROPÄISCHE PATENTANMELDUNG

(11) **EP 2 082 793 A1**
(43) Veröffentlichungstag der Anmeldung: **29.07.2009**
(21) Anmeldenummer: 08171271.3
(22) Anmeldetag: 11.12.2008
(51) Int. Cl.: B01D 29/11

(54) **Filtereinrichtung**

(30) Priorität: 31.12.2007 DE 102007063243
(71) Anmelder: Mahle International GmbH, 70376 Stuttgart (DE)
(72) Erfinder: Geisbauer, Heinz, 74629, Pfedelbach (DE)
(74) Vertreter: Bongen, Renaud & Partner

(57) **Zusammenfassung**

Die Erfindung betrifft eine Filtereinrichtung (1) zum Entfernen von Feststoffen aus einer Flüssigkeit, mit einem Gehäuse (2), das einen Zulauf (3) und einen Ablauf (4) aufweist, mit wenigstens einem zylindrischen Filterkörper (5), der im Gehäuse (2) einen mit dem Zulauf (3) kommunizierend verbundenen Rohraum (6) von einem mit dem Ablauf (4) kommunizierend verbundenen Reinraum (7) trennt, mit einer Fördereinrichtung (10), die eine relativ zum Filterkörper (5) drehend verstellbare, rohseitig angeordnete Förderschnecke (11) zum Fördern von Feststoffen in Richtung zu einer Austragöffnung (12) aufweist, mit einer Rückspüleinrichtung (14), die zumindest einen relativ zum Filterkörper (5) drehend verstellbaren, reinseitig angeordneten Rückspülkanal (15) zum Rückspülen des Filterkörpers (5) mit einem über den Rückspülkanal (15) zugeführten Rückspülmedium aufweist, mit einem gemeinsamen Drehantrieb (16) zum drehenden Antreiben sowohl der Förderschnecke (11) als auch des Rückspülkanals (15) relativ zum Filterkörper (5) und relativ zum Gehäuse (2).

## Beschreibung

Die vorliegende Erfindung betrifft eine Filtereinrichtung zum Entfernen von Feststoffen aus einer Flüssigkeit.

Es sind eine Vielzahl industrieller Anwendungen bekannt, bei denen Feststoffe aus Flüssigkeiten herausgefiltert werden müssen. Beispielsweise kann in der Lebensmittelindustrie vorgesehen sein, Feststoffe aus einer flüssigen Masse, wie z.B. aus einer Schokoladenmasse, herauszufiltern. In der metallbearbeitenden Industrie können derartige Filtereinrichtungen zum Filtern von Kühlschmierstoffen dienen, um bei der Bearbeitung gegebenenfalls anfallende Feststoffe, wie z.B. Späne, aus dem Kühlschmierstoff herauszufiltern.

Eine derartige Filtereinrichtung umfasst üblicherweise ein Gehäuse mit einem Zulauf und einem Ablauf. Im Gehäuse kann ein zylindrischer Filterkörper einen mit dem Zulauf kommunizierenden Rohraum von einem mit dem Ablauf kommunizierenden Reinraum trennen. Ferner ist es grundsätzlich bekannt, einem Filterkörper eine Rückspüleinrichtung zuzuordnen, die einen reinseitig angeordneten Rückspülkanal zum Rückspülen des Filterkörpers mit einem über den Rückspülkanal zugeführten Rückspülmedium aufweist. Um eine segmentweise Abreinigung des Filterkörpers zu realisieren, sind Filterkörper und Rückspülkanal relativ zueinander drehend verstellbar. Hierzu kann ein Drehantrieb zum drehenden Antreiben des Filterkörpers oder des Rückspülkanals vorgesehen sein.

Die vorliegende Erfindung beschäftigt sich mit dem Problem, für eine Filtereinrichtung der eingangs genannten Art eine verbesserte Ausführungsform anzugeben, die sich insbesondere dadurch auszeichnet, dass sie einen vergleichsweise einfachen Aufbau aufweist und/oder eine relativ lang anhaltende Filterwirkung besitzt.

Diese Problem wird erfindungsgemäß durch den Gegenstand des unabhängigen Anspruchs gelöst. Vorteilhafte Ausführungsformen sind Gegenstand der abhängigen Ansprüche.

Um die Filterwirkung der Filtereinrichtung zeitlich zu verlängern, ist die Filtereinrichtung erfindungsgemäß mit einer Fördereinrichtung ausgestattet, die eine relativ zum Filterkörper drehend verstellbare, rohseitig angeordnete Förderschnecke aufweist, mit deren Hilfe Feststoffe in Richtung zu einer Austragöffnung gefördert werden können. Durch das Fördern der abgeschiedenen Feststoffe vom Filterkörper weg zu einer Austragöffnung, kann eine die Filtrationswirkung behindernde Anlagerung von Feststoffen reduziert werden, wodurch die Filtereinrichtung länger betrieben werden kann. Insbesondere in Verbindung mit der Rückspüleinrichtung lassen sich die rückgespülten Feststoffe rohseitig leichter vom Filterkörper wegführen, was die Effektivität der Rückspülung hinsichtlich ihrer Langzeitwirkung erhöht.

Besonders vorteilhaft ist dabei die erfindungsgemäße Überlegung, einen gemeinsamen Drehantrieb zum drehenden Antreiben sowohl der Förderschnecke als auch des Rückspülkanals relativ zum Filterkörper und Relativ zum Gehäuse vorzusehen. Somit lassen sich die erforderlichen Relativbewegungen einerseits zwischen dem Rückspülkanal und dem Filtergehäuse und andererseits zwischen der Förderschnecke und dem Filtergehäuse preiswert realisieren. Bemerkenswert ist dabei, dass der Rückspülkanal relativ zum Gehäuse drehend angetrieben wird, während der Filterkörper relativ zum Gehäuse drehfest angeordnet sein kann. Obwohl der Aufwand zur Realisierung eines rotierbaren Rückspülkanals vergleichsweise groß ist, ergibt sich durch die Kopplung der Drehverstellung des Rückspülkanals mit der Drehverstellung der Förderschnecke eine signifikante Vereinfachung, da nur ein einziger Drehantrieb verwendet werden muss. Insbesondere ist dann auch nur eine einzige Steuerung bzw. Leistungsschaltung zur Betätigung des gemeinsamen Drehantriebs erforderlich. Des weiteren ermöglicht die gewählte Bauweise eine liegende Anordnung für die Filtereinrichtung. Das bedeutet, dass die Längsmittelachse des Filterkörpers im wesentlichen horizontal angeordnet werden kann, also gegenüber einer Vertikalrichtung mit einem Winkel von mehr als 45°, insbesondere mit einem Winkel von 90° +/- 15° orientiert ist. Die drehende Förderschnecke ermöglicht bei feststehendem Filterkörper auch bei der liegenden Anordnung den erwünschten Abtransport der Feststoffe.

Die kinematische Umkehr dieser Relativbewegung funktioniert bei liegendem Filtergehäuse nicht, da bei drehendem Filterkörper und stillstehender Förderschnecke keine Transportwirkung entsteht. Dementsprechend ist eine Bauweise mit stillstehender Förderschnecke auf eine stehende Anordnung des Filtergehäuses angewiesen, um die Förderwirkung durch die Gravitationskraft zu bewirken bzw. zu verstärken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen vereinfachten Längsschnitt durch eine Filtereinrichtung,
- Fig. 2: einen Längsschnitt wie in Fig. 1, jedoch bei einer anderen Ausführungsform,
- Fig. 3: ein Querschnitt der Filtereinrichtung entsprechend Schnittlinien III in den Fig. 1 und 2,
- Fig. 4: eine vergrößertes Detail IV der Filtereinrichtungen der Fig. 1 und 2, jedoch bei einer anderen Ausführungsform.

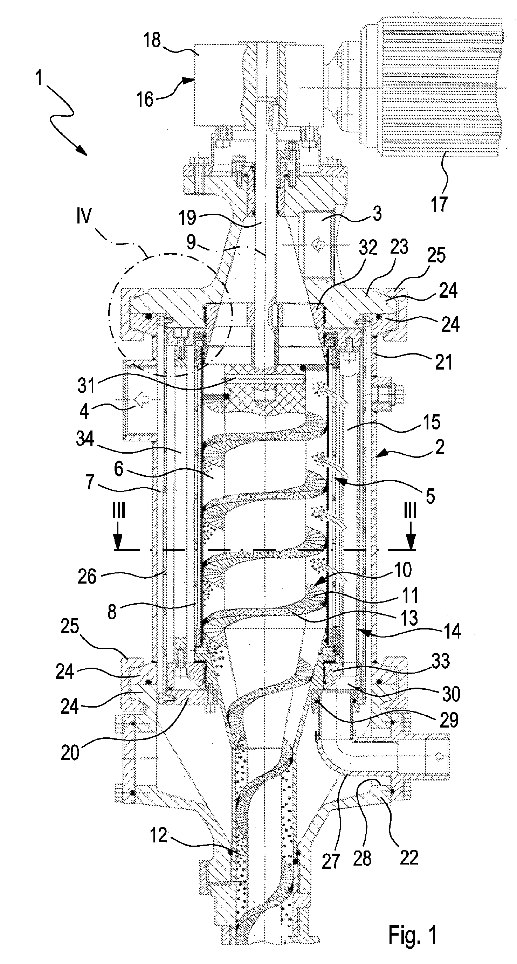

Entsprechend den Fig. 1 bis 3 umfasst eine erfindungsgemäße Filtereinrichtung 1, mit deren Hilfe Feststoffe aus einer Flüssigkeit entfernt werden können, ein Gehäuse 2. Das Gehäuse 2 weist einen Zulauf 3 und einen Ablauf 4 auf. Im Gehäuse 2 ist zumindest ein zylindrischer Filterkörper 5 angeordnet. Dieser trennt im Gehäuse 2 einen Rohraum 6 von einem Reinraum 7. Während der Rohraum 6 mit dem Zulauf 3 kommunizierend verbunden ist, ist der Reinraum 7 mit dem Ablauf 4 kommunizierend verbunden. Der Filterköper 5 umfasst eine Filterstruktur 8, die zylindrisch oder mantelförmiger oder ringförmig angeordnet ist. Je nach Bauart des Filterkörpers 5 besteht die Filterstruktur 8 aus einem Lochblech, insbesondere aus einem Kantenlochblech, aus einem profilierten Draht zum Herstellen eines Kantenspaltfilters oder aus einem Drahtgewirk oder aus einem Filterpapier oder Filtervlies. Bei der hier gezeigten bevorzugten Ausführungsform ist der Filterkörper 5 bzw. dessen Filterstruktur 8 im Filtrierbetrieb radial von innen nach außen durchströmbar, so dass die Rohseite 6 radial innen angeordnet ist, während sich die Reinseite 7 radial außen befindet. Eine umgekehrte Bauweise ist ebenso möglich.

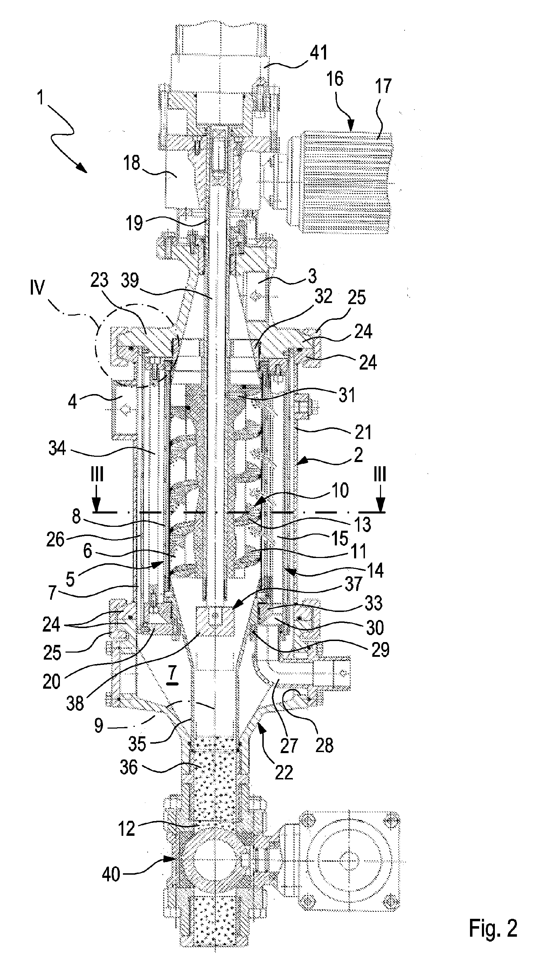

Der Filterkörper 5 definiert eine Längsachse 9, zu der sich der Filterkörper 5 koaxial erstreckt. In den Fig. 1 und 2 ist eine stehende Anordnung der Filtereinrichtung 1 dargestellt. Grundsätzlich ist jedoch auch eine um ca. 90° in der Zeichnungsebene gedrehte liegende Anordnung möglich. Bei der stehenden Anordnung erstreckt sich die Längsachse 9 im wesentlichen vertikal, während sie bei der liegenden Anordnung im wesentlichen horizontal verläuft.

Die Filtereinrichtung 1 ist mit einer Fördereinrichtung 10 ausgestattet. Diese weist eine Förderschnecke 11 auf, mit deren Hilfe Feststoffe vom Filterkörper 5 wegtransportierbar und in Richtung zu einer Austragöffnung 12 hin transportierbar sind. Hierzu ist die Förderschnecke 11 relativ zum Filterkörper 5 drehend verstellbar. Ferner ist die Förderschnecke 11 rohseitig angeordnet. Im Beispiel also radial innen. Die Förderschnecke 11 wirkt im gezeigten Beispiel unmittelbar mit dem Filterkörper 5 zusammen, das heißt, die Förderschnecke 11 fördert die rohseitig abgeschiedenen Feststoffe von einer rohseitigen Oberfläche des Filterkörpers 5 weg. Hierdurch bildet die Fördereinrichtung 10 gleichzeitig eine Abstreifeinrichtung zum mechanischen Abstreifen der sich rohseitig am Filterkörper 5 anlagernden Feststoffe. Zweckmäßig ist die Förderschnecke 11 hierzu als schraubenförmige Bürste 13 ausgestaltet. Das Abstreifen der rohseitig abgelagerten Feststoffe kann dabei mit oder ohne Radialspiel erfolgen. Sofern das Abstreifen ohne Radialspiel durchgeführt wird, kann die Bürste 13 die Feststoffe direkt vom Filterkörper 5 abbürsten. Sofern mit Radialspiel gearbeitet wird, lässt die Bürste 13 am Filterkörper 5 einen Filterkuchen vorbestimmter Dicke stehen, der bei bestimmten Anwendungen zur Verbesserung der Filtrationswirkung genutzt werden kann.

Die Filtereinrichtung 1 weist außerdem eine Rückspüleinrichtung 14 auf. Diese besitzt zumindest einen Rückspülkanal 15, der reinseitig, hier also radial außen angeordnet ist. Über diesen Rückspülkanal 15 kann ein geeignetes Rückspülmedium zum Filterkörper 5 zugeführt werden, um diesen partiell bzw. segmentweise rückzuspülen. Bei der Rückspülung wird der Filterkörper 5 bzw. seine Filterstruktur 8 entgegen der beim Filtrierbetrieb üblichen Durchströmungsrichtung mit dem Rückspülmedium durchströmt, also gespült, wodurch die rohseitig angelagerten Feststoffe effektiv vom Filterkörper 5 entfernt werden können. Als Rückspülmedium eignet sich beispielsweise die reinseitige Flüssigkeit. Ebenso kann ein anderes geeignetes Rückspülmedium, wie z.B. Pressluft, verwendet werden.

Um den Filterkörper 5 entlang seines gesamten Umfangs Rückspülen zu können, ist der Rückspülkanal 15 relativ zum Filterkörper 5 drehend verstellbar angeordnet. Dabei rotiert der Rückspülkanal 15 um den Filterkörper 5, der vorzugsweise relativ zum Gehäuse 2 drehfest angeordnet ist. Auch die Förderschnecke 11 ist relativ zum Filterkörper 5 drehend verstellbar angeordnet. Dabei dreht sich die Förderschnecke 11 bzw. die Schraubenbürste 13 gegenüber dem Gehäuse 2, während der Filterkörper 5 relativ zum Gehäuse 2 still steht. Zum drehenden Antreiben sowohl der Förderschnecke 11 als auch des Rückspülkanals 15 ist die Filtereinrichtung 1 mit einem gemeinsamen Drehantrieb 16 ausgestattet. Besagter Drehantrieb 16 treibt den Rückspülkanal 15 und die Förderschnecke 11 gleichförmig, also mit gleicher Drehzahl relativ zum Filterköper 5 und relativ zum Gehäuse 2 an. Der Drehantrieb 16 kann beispielsweise einen Elektromotor 17 aufweisen, der über ein Getriebe 18 eine Antriebswelle 19 antreibt, die sich koaxial zur Längsachse 9 erstreckt. Die Längsachse 9 bildet dadurch gleichzeitig die Rotationsachse für den Rückspülkanal 15 und für die Förderschnecke 11.

Der Filterkörper 5 weist an seinem in den Fig. 1 und 2 unten dargestellten axialen Ende einen Abschlusskörper 20 auf. Dieser ist am Gehäuse 2 drehfest abgestützt. Das Gehäuse 2 besteht hier aus einem Mittelkörper 21 sowie aus zwei Endkörpern 22 und 23, die an die axialen Enden des zylindrischen Mittelkörpers 21 angebaut sind. Hierzu sind entsprechende Flansche 24 vorgesehen, die über Klammern 25 aneinander festgelegt sind. Zur drehfesten Abstützung des Abschlusskörpers 20 am Gehäuse 2 ist hier eine Zarge 26 vorgesehen, die für die zu filternde Flüssigkeit radial durchlässig ausgestaltet ist und die hier am oben dargestellten Endkörper 23 am Gehäuse 2 drehfest abgestützt ist.

Bei den Ausführungsformen der Fig. 1 und 2 weist die Rückspüleinrichtung 14 eine Zuführleitung 27 auf. Sie ist an einem gehäuseseitigen Anschluss 28 am Gehäuse 2, hier am unten dargestellten Endkörper 22 angeflanscht und verbindet diesen Anschluss 22 mit einem am Abschlusskörper 20 des Filterkörpers 5 angeordneten Anschluss 29. Über den am Gehäuse 2 ausgebildeten Anschluss 28 bzw. durch die Zuführleitung 27 gelangt das Rückspülmedium zum Anschluss 29 am Abschlusskörper 20. Von da aus gelangt das Rückspülmedium in den Rückspülkanal 15 und zwar über einen Ringkanal 30.

Die Antriebswelle 19 ist mit der Förderschnecke 11 drehfest verbunden. Eine entsprechende Verzapfung ist in den Fig. 1 und 2 mit 31 bezeichnet. Außerdem ist die Antriebswelle 19 mit einer Antriebsscheibe 32 drehfest verbunden. Diese ist am Gehäuse 2, hier am oben dargestellten Endkörper 23 drehbar gelagert. Ferner ist diese Antriebsscheibe 32 mit dem Rückspülkanal 15 drehfest verbunden. Der Rückspülkanal 15 wird somit über die Antriebsscheibe 32 drehend angetrieben. Die Antriebsscheibe 32 ist außerdem am Filterkörper 5 drehbar gelagert. Hierdurch kann die Lage des Filterkörpers 5 im Gehäuse 2 stabilisiert werden.

Der Rückspülkanal 15 ist nun an seinem von der Antriebsscheibe 32 entfernten Ende mit einem Ringkörper 33 drehfest verbunden. Besagter Ringkörper 33 ist am Abschlusskörper 20 des Filterkörpers 5 drehbar gelagert und enthält den zuvor genannten Ringkanal 30. Besagter Ringkanal 30 kommuniziert einerseits mit dem Rückspülkanal 15 und andererseits mit dem am Anschlusskörper 20 ausgebildeten Anschluss 29 für das Rückspülmedium. Darüber hinaus sind die Antriebsscheibe 32 und der Ringkörper 33 über wenigstens einen sich parallel zum Rückspülkanal 15 erstreckenden Zuganker 34 aneinander befestigt. Hierdurch bilden die Antriebsscheibe 32, der Ringkörper 33, der Rückspülkanal 15 und der wenigstens eine Zuganker 34 ein Käfig, das als komplette Einheit durch die Antriebswelle 19 um die Rotationsachse 9 drehend verstellbar ist, das den Filterkörper 5 koaxial umschließt und das koaxial in der Zarge 26 angeordnet ist.

Der Filterkörper 5 ist an seinem in das Gehäuse 2 hineinragenden Ende über den dort angeordneten Abschlusskörper 20 am Gehäuse 2 drehfest angeordnet. Hierzu ist der Abschlusskörper 20 über geeignete Befestigungsmittel am Gehäuse 2 drehfest fixiert. Im gezeigten Beispiel erfolgt dies mittels der Zarge 26 im Bereich des vom Abschlusskörper 20 entfernten Endes des Filterkörpers 5. Das vom Abschlusskörper 20 entfernte Ende des Filterkörpers 5 ist dabei ohne Kontakt zum Gehäuse 2. Im Beispiel ist es in der oder an der Antriebsscheibe 32 drehbar gelagert.

Bei der in Fig. 1 gezeigten Ausführungform fördert die Förderschnecke 11 die abgeschiedenen Feststoffe bis zur Austragöffnung 12. Im Unterschied dazu ist bei der in Fig. 2 gezeigten Ausführungsform die Förderschnecke 11 in axialer Richtung kürzer ausgestaltet und endet noch im Filterkörper 5. Der Abschlusskörper 20 ist hier mit einer Verlängerung 35 ausgestattet, die den Rohraum 6 bis zur Austragöffnung 12 verlängert. Dabei schließt der Rohrkörper 35 an einen Sammelraum 36 an, in dem sich die Feststoffe bei geschlossener Austragsöffnung 12 ansammeln. Zum Komprimieren und Verdichten der Feststoffe im Sammelraum 36 ist hier eine Kompressionseinrichtung 37 vorgesehen, die mit einem Kolben 38 arbeitet, der mittels einer Kolbenstange 39 koaxial zur Rotationsachse 9 hubverstellbar ist und in den Sammelraum 36 einfahrbar ist. Beim Einfahren in den Sammelraum 36 verdrängt der Kolben 38 die Flüssigkeit, während die Feststoffe im Sammelraum 36 verbleiben und verdichtet werden. Die Kolbenstange 39 ist hier koaxial in der Antriebswelle 19 angeordnet, die zu diesem Zweck als Hohlwelle ausgestaltet ist. Die Austragöffnung 12 kann mit Hilfe einer Ventileinrichtung 40 geöffnet und gesperrt werden.

Für die Hubverstellung der Kolbenstange 39 ist ein entsprechender Stellantrieb 41 vorgesehen, bei dem es sich beispielsweise um ein Kolben-Zylinder-Aggregat handeln kann, das beispielweise an das Getriebe 18 angeflanscht sein kann.

Während die in Fig. 1 gezeigte Ausführungsform bevorzugt bei einer liegenden Anordnung zum Einsatz kommt, kann es für die in Fig. 2 gezeigte Ausführungsform zweckmäßig sein, sie stehend zu verwenden, da dann die Sedimentation der Feststoffe, die mit Hilfe der Fördereinrichtung 10 bis zum Rohrkörper 35 gefördert werden können, in Richtung des Sammelraums 36 begünstigt ist.

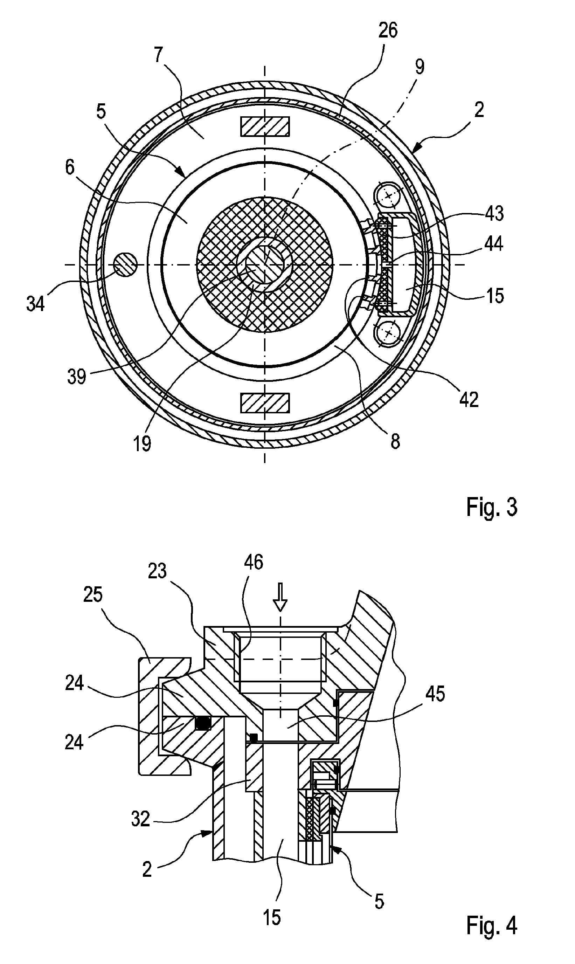

Entsprechend Fig. 3 erstreckt sich der Rückspülkanal 15 in der Umfangsrichtung des Filterkörpers 5 nur über einen relativ kleinen Umfangsabschnitt. Der Filterkörper 5 kann in seiner Filterstruktur 8 eine Vielzahl radialer Stege 42 aufweisen, an denen sich dann das jeweilige Filtermaterial abstützt. Der Rückspülkanal 15 ist hier mit einem Anlagekörper 43 ausgestattet, der wie eine Dichtung außen am Filterkörper 5 zur Anlage kommt. Eine zentrale Rückspüldüse 44, die sich insbesondere über die axiale Länge des Filterkörpers 5 erstrecken kann, führt dann zu einer segmentweißen Rückspülung des Filterkörpers 5, wobei die einzelnen Segmente durch die Stege 42 gebildet werden. Der Anlagekörper 43 bewirkt hierbei eine Abdichtung der jeweils zum rückgespülten Segment benachbarten Segmente, was die Rückspülwirkung innerhalb des jeweiligen Segments verstärkt.

Fig. 4 zeigt eine alternative Lösung für die Zuführung des Rückspülmediums. Hierzu kann im Gehäuse 2, insbesondere in dem in den Fig. 1 und 2 oben dargestellten Endkörper 23, ein Ringkanal 45 ausgebildet sein, der durch die Antriebsscheibe 32 hindurch mit dem Rückspülkanal 15 kommunizierend verbunden ist. Am Gehäuse 2 bzw. am oberen Endkörper 23 ist ein Anschluss 46 für das Rückspülmedium vorgesehen, der mit dem genannten Ringkanal 45 kommuniziert.

## Patentansprüche

1. Filtereinrichtung zum Entfernen von Feststoffen aus einer Flüssigkeit,
- mit einem Gehäuse (2), das einen Zulauf (3) und einen Ablauf (4) aufweist,
- mit wenigstens einem zylindrischen Filterkörper (5), der im Gehäuse (2) einen mit dem Zulauf (3) kommunizierend verbundenen Rohraum (6) von einem mit dem Ablauf (4) kommunizierend verbundenen Reinraum (7) trennt,
- mit einer Fördereinrichtung (10), die eine relativ zum Filterkörper (5) drehend verstellbare, rohseitig angeordnete Förderschnecke (11) zum Fördern von Feststoffen in Richtung zu einer Austragöffnung (12) aufweist,
- mit einer Rückspüleinrichtung (14), die zumindest einen relativ zum Filterkörper (5) drehend verstellbaren, reinseitig angeordneten Rückspülkanal (15) zum Rückspülen des Filterkörpers (5) mit einem über den Rückspülkanal (15) zugeführten Rückspülmedium aufweist,
- mit einem gemeinsamen Drehantrieb (16) zum drehenden Antreiben sowohl der Förderschnecke (11) als auch des Rückspülkanals (15) relativ zum Filterkörper (5) und relativ zum Gehäuse (2).

2. Filtereinrichtung nach Anspruch 1,
**dadurch gekennzeichnet,**
**dass** der Filterkörper (5) an einem axialen Ende einen Abschlusskörper (20) aufweist, der am Gehäuse (2) drehfest abgestützt ist, wobei der Abschlusskörper (20) insbesondere über eine radial für Flüssigkeit durchlässige Zarge (26) am Gehäuse (2) abgestützt sein kann.

3. Filtereinrichtung nach Anspruch 2,
**dadurch gekennzeichnet,**
**dass** die Rückspüleinrichtung (14) eine Zuführleitung (27) aufweist, die einen am Gehäuse (2) ausgebildeten Anschluss (2) für das Rückspülmedium mit einem am Abschlusskörper (20) angeordneten, mit dem Rückspülkanal (15) kommunizierend verbundenen Anschluss (29) verbindet.

4. Filterkörper nach einem der Ansprüche 1 bis 3,
**dadurch gekennzeichnet,**
**dass** der Drehantrieb (16) eine Antriebswelle (19) drehend antreibt.

5. Filtereinrichtung nach Anspruch 4,
**dadurch gekennzeichnet,**
**dass** die Förderschnecke (11) mit der Antriebswelle (19) drehfest verbunden ist.

6. Filtereinrichtung nach Anspruch 4 oder 5,
**dadurch gekennzeichnet,**
**dass** die Antriebswelle (19) mit einer Antriebsscheibe (32) drehfest verbunden ist, die am Gehäuse (2) drehbar gelagert ist und die mit dem Rückspülkanal (15) drehfest verbunden ist.

7. Filtereinrichtung nach Anspruch 6,
**dadurch gekennzeichnet,**
**dass** die Antriebsscheibe (32) am Filterkörper (5) drehbar gelagert ist.

8. Filtereinrichtung nach Anspruch 6 oder 7,
**dadurch gekennzeichnet,**
**dass** die Rückspüleinrichtung (14) einen am Gehäuse (2) ausgebildeten Anschluss (46) für das Rückspülmedium aufweist, der über einen im Gehäuse (2) ausgebildeten Ringkanal (45) durch die Antriebsscheibe (32) mit dem Rückspülkanal (15) kommunizierend verbunden ist.

9. Filtereinrichtung nach einem der Ansprüche 6 bis 8,
**dadurch gekennzeichnet,**
**dass** der Rückspülkanal (15) an seinem von der Antriebsscheibe (32) entfernten Ende mit einem Ringkörper (33) drehfest verbunden ist.

10. Filtereinrichtung nach den Ansprüchen 2 und 9,
**dadurch gekennzeichnet,**
**dass** der Ringkörper (33) am Abschlusskörper (20) drehbar gelagert ist.

11. Filtereinrichtung nach Anspruch 9 oder 10,
**dadurch gekennzeichnet,**
**dass** der Ringkörper (33) einen mit dem Rückspülkanal (15) kommunizierend verbundenen Ringkanal (30) aufweist.

12. Filtereinrichtung nach den Ansprüchen 3 und 11,
**dadurch gekennzeichnet,**
**dass** der Ringkanal (30) mit dem am Abschlusskörper (20) ausgebildeten Anschluss (29) für das Rückspülmedium kommunizierend verbunden ist.

13. Filtereinrichtung nach einem der Ansprüchen 6 bis 12,
**dadurch gekennzeichnet,**
**dass** die Antriebsscheibe (32) über wenigstens einen Zuganker (34) mit dem Ringkörper (33) verbunden ist.
